(19) Europäisches Patentamt
European Patent Office
Office européen des brevets

(11) EP 3 750 961 A1

(12) **EUROPEAN PATENT APPLICATION**
published in accordance with Art. 153(4) EPC

(43) Date of publication:
**16.12.2020 Bulletin 2020/51**

(21) Application number: **19751550.5**

(22) Date of filing: **08.02.2019**

(51) Int Cl.:
***C09J 4/04*** *(2006.01)* ***C09J 11/06*** *(2006.01)*

(86) International application number:
**PCT/JP2019/004678**

(87) International publication number:
**WO 2019/156227 (15.08.2019 Gazette 2019/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.02.2018 JP 2018022462**
**09.02.2018 JP 2018022463**
**09.02.2018 JP 2018022464**

(71) Applicant: **Toagosei Co., Ltd.**
**Minato-ku**
**Tokyo 105-8419 (JP)**

(72) Inventors:
- **ISSHIKI, Erika**
**Nagoya-shi, Aichi 455-0026 (JP)**
- **ISHIZAKI, Kenichi**
**Nagoya-shi, Aichi 455-0026 (JP)**
- **HORIE, Yoji**
**Nagoya-shi, Aichi 455-0026 (JP)**
- **OKAZAKI, Eiichi**
**Nagoya-shi, Aichi 455-0026 (JP)**

(74) Representative: **Rüger Abel Patentanwälte PartGmbB**
**Patentanwälte**
**Webergasse 3**
**73728 Esslingen a. N. (DE)**

# (54) ADHESIVE COMPOSITION THAT EASILY DISINTEGRATES IN WATER

(57) An easily water-disintegrable adhesive composition contains a 2-cyanoacrylate compound and a water-soluble compound, and wherein a cured product of the adhesive composition has a water absorption rate of 5% or higher when immersed in 40°C water for 24 hours. The cured product of the adhesive composition preferably has a water absorption rate of 5% or higher when immersed in 23°C water for 24 hours.

EP 3 750 961 A1

## Description

The present invention relates to an easily water-disintegrable adhesive composition.

Adhesive compositions containing a 2-cyanoacrylate compound are, because of unique anionic polymerizability attributed to the 2-cyanoacrylate compound contained as a main component, capable of initiating polymerization with a weak anion, such as a trace amount of water adhering to the surface of an adherend, and thereby firmly bonding various materials in a short period. Therefore, such adhesive compositions are used as so-called instant adhesives in a wide range of fields including industrial, medical, and household applications.

A cured product of an adhesive composition containing a 2-cyanoacrylate compound is hard and has excellent shear adhesive strength; however, when the adhesive composition is to be peeled off or removed after being cured, the peeling or the removal may take time or an adherend may be damaged due to excessively strong adhesion.

As a technology for peeling off an adhesive composition containing a 2-cyanoacrylate compound, for example, in Patent Document 1, it is described to peel off a cyanoacrylate adhesive composition, which is obtained by blending a cyanoacrylate with a water-soluble polyoxyalkylene glycol-based solvent and a water-soluble surfactant and has an improved post-curing solubility in water, by immersion in hot water or pressurized hot water.

Further, Patent Document 2 discloses a method of peeling off a processed product, which is a quartz glass workpiece that has been fixed onto a surface plate with a fixative and then machined, from the surface plate by heating, wherein the fixative is a UV-curable resin and the processed product is impregnated with a halogen-containing organic solvent before being peeled off from the surface plate, and it is described to use a cyanoacrylic adhesive as the fixative.

Patent Document 1: Japanese Patent Application Laid-Open (JP-A) No. 2000-73015
Patent Document 2: JP-A No. 2011-104747

However, in the technology described in Patent Document 1, in order to peel off the adhesive composition, it is necessary to immerse a cured product thereof in hot water or pressurized hot water (100°C to 130°C) for a period of from 20 minutes to 80 minutes and, in the technology described in Patent Document 2, it is necessary to heat a cured product in water until water is boiled and to further maintain the cured product for a period of from about 5 minutes to about 20 minutes once water is boiled.

Accordingly, when human fingers are bonded together with such an adhesive composition, the methods described in these Patent Documents cannot be employed due to the risk of a burn injury. In addition, the use of such an adhesive composition for temporary bonding in an industrial application has a problem in that the cost is increased for ensuring and maintaining the amount of heat required for peeling.

In view of the above, an object of the invention is to provide an easily water-disintegrable adhesive composition which, after being cured, can be easily peeled off or removed with water as compared to an adhesive composition containing only a corresponding cyanoacrylate compound.

Means for solving the above-described problems include the following aspects.

<1> An easily water-disintegrable adhesive composition, containing:

a 2-cyanoacrylate compound; and
a water-soluble compound,
wherein a cured product of the adhesive composition has a water absorption rate of 5% or higher when immersed in 40°C water for 24 hours.

<2> The easily water-disintegrable adhesive composition according to <1>, wherein the cured product of the adhesive composition has a water absorption rate of 5% or higher when immersed in 23°C water for 24 hours.

<3> The easily water-disintegrable adhesive composition according to <1> or <2>, wherein the cured product of the adhesive composition has an elution rate of 5% or higher when immersed in 40°C water for 24 hours.

<4> The easily water-disintegrable adhesive composition according to any one of <1> to <3>, wherein the cured product of the adhesive composition has an elution rate of 2% or higher when immersed in 23°C water for 24 hours.

<5> The easily water-disintegrable adhesive composition according to any one of <1> to <4>, wherein the water-soluble compound has a solubility parameter of from 8.0 $(cal/cm^3)^{0.5}$ to 23.4 $(cal/cm^3)^{0.5}$.

<6> The easily water-disintegrable adhesive composition according to any one of <1> to <5>, wherein the 2-cyanoacrylate compound has a solubility parameter of from 10.0 $(cal/cm^3)^{0.5}$ to 23.4 $(cal/cm^3)^{0.5}$.

<7> The easily water-disintegrable adhesive composition according to any one of <1> to <6>, wherein the cured product of the adhesive composition has a total light transmittance of 80% or higher as measured in accordance with JIS K7361-1, and the cured product has a total light transmittance of 50% or lower as measured in accordance with JIS K7361-1 after being immersed in 40°C water for 24 hours.

<8> The easily water-disintegrable adhesive composition according to any one of <1> to <7>, wherein the cured product has a total light transmittance of 70% or lower as measured in accordance with JIS K7361-1 after being immersed in 23°C water for 24 hours.
<9> The easily water-disintegrable adhesive composition according to any one of <1> to <8>, wherein the cured product of the adhesive composition has a haze value of from 1% to 70% as measured in accordance with JIS K7136, and the cured product has a haze value of 95% or higher as measured in accordance with JIS K7136 after being immersed in 40°C water for 24 hours.
<10> The easily water-disintegrable adhesive composition according to any one of <1> to <9>, wherein the cured product has a haze value of 95% or higher as measured in accordance with JIS K7136 after being immersed in 23°C water for 24 hours.
<11> The easily water-disintegrable adhesive composition according to any one of <1> to <10>, wherein the content of the water-soluble compound is from 0.5 parts by mass to 50 parts by mass with respect to a total content of 100 parts by mass of the 2-cyanoacrylate compound and the water-soluble compound.
<12> The easily water-disintegrable adhesive composition according to any one of <1> to <11>, wherein the 2-cyanoacrylate compound is an alkyl-2-cyanoacrylate compound, or a 2-cyanoacrylate compound having an ether bond, a carbonate bond, or a sulfonyl bond.
<13> The easily water-disintegrable adhesive composition according to any one of <1> to <12>, wherein the 2-cyanoacrylate compound is at least one compound selected from the group consisting of ethyl-2-cyanoacrylate, ethoxyethyl-2-cyanoacrylate, methoxyethyl-2-cyanoacrylate, methoxypropoxypropyl-2-cyanoacrylate, tetrahydrofurfuryl-2-cyanoacrylate, glycerol carbonate-2-cyanoacrylate, sulforanylmethyl-2-cyanoacrylate, and methoxyethoxyethyl-2-cyanoacrylate.
<14> The easily water-disintegrable adhesive composition according to any one of <1> to <13>, wherein the water-soluble compound is at least one compound selected from the group consisting of ethylene carbonate, dimethyl sulfone, sulfolane, $\gamma$-butyrolactone, propylene carbonate, triethylene glycol dimethyl ether, tetraethylene glycol dimethyl ether, polyoxyethylene decyl ether, and fatty acid polyoxyethylene glycerol borate.
<15> The easily water-disintegrable adhesive composition according to any one of <1> to <14>, which is for temporary fixation.
<16> The easily water-disintegrable adhesive composition according to any one of <1> to <15>, which is for a teaching material.

<2-1> An easily water-disintegrable adhesive composition, containing:

a 2-cyanoacrylate compound; and
a water-soluble compound,
wherein the water-soluble compound has a solubility parameter of from 8.0 $(cal/cm^3)^{0.5}$ to 23.4 $(cal/cm^3)^{0.5}$.

<2-2> The easily water-disintegrable adhesive composition according to <2-1>, wherein the 2-cyanoacrylate compound has a solubility parameter of from 10.0 $(cal/cm^3)^{0.5}$ to 23.4 $(cal/cm^3)^{0.5}$.
<2-3> The easily water-disintegrable adhesive composition according to <2-1> or <2-2>, wherein the content of the water-soluble compound is from 0.5 parts by mass to 50 parts by mass with respect to a total content of 100 parts by mass of the 2-cyanoacrylate compound and the water-soluble compound.
<2-4> The easily water-disintegrable adhesive composition according to any one of <2-1> to <2-3>, wherein the 2-cyanoacrylate compound is an alkyl-2-cyanoacrylate compound, or a 2-cyanoacrylate compound having an ether bond, a carbonate bond, or a sulfonyl bond.
<2-5> The easily water-disintegrable adhesive composition according to any one of <2-1> to <2-4>, wherein the 2-cyanoacrylate compound is at least one compound selected from the group consisting of ethyl-2-cyanoacrylate, methoxyethyl-2-cyanoacrylate, ethoxyethyl-2-cyanoacrylate, methoxypropoxypropyl-2-cyanoacrylate, tetrahydrofurfuryl-2-cyanoacrylate, glycerol-1,2-carbonate-3-(2-cyanoacrylate), sulforanylmethyl-2-cyanoacrylate, and methoxyethoxyethyl-2-cyanoacrylate.
<2-6> The easily water-disintegrable adhesive composition according to any one of <2-1> to <2-5>, wherein the water-soluble compound is at least one compound selected from the group consisting of ethylene carbonate, dimethyl sulfone, sulfolane, $\gamma$-butyrolactone, propylene carbonate, triethylene glycol dimethyl ether, tetraethylene glycol dimethyl ether, polyoxyalkylene alkyl ether, polyoxyalkylene dialkyl ether, polyoxyalkylene acetate, polyoxyalkylene diacetate, and fatty acid polyoxyethylene glycerol borate.
<2-7> The easily water-disintegrable adhesive composition according to any one of <2-1> to <2-6>, which is for temporary fixation.
<2-8> The easily water-disintegrable adhesive composition according to any one of <2-1> to <2-7>, which is for a teaching material.

<3-1> An easily water-disintegrable adhesive composition, containing:

a 2-cyanoacrylate compound; and
a water-soluble compound,
wherein
a cured product of the adhesive composition has a total light transmittance of 80% or higher as measured in accordance with JIS K7361-1, and
the cured product has a total light transmittance of 50% or lower as measured in accordance with JIS K7361-1 after being immersed in 40°C water for 24 hours.

<3-2> The easily water-disintegrable adhesive composition according to <3-1>, wherein the cured product has a total light transmittance of 70% or lower as measured in accordance with JIS K7361-1 after being immersed in 23°C water for 24 hours.
<3-3> The easily water-disintegrable adhesive composition according to <3-1> or <3-2>, wherein
the cured product of the adhesive composition has a haze value of from 1% to 70% as measured in accordance with JIS K7136, and
the cured product has a haze value of 95% or higher as measured in accordance with JIS K7136 after being immersed in 40°C water for 24 hours.
<3-4> The easily water-disintegrable adhesive composition according to any one of <3-1> to <3-3>, wherein the cured product has a haze value of 95% or higher as measured in accordance with JIS K7136 after being immersed in 23°C water for 24 hours.
<3-5> The easily water-disintegrable adhesive composition according to any one of <3-1> to <3-4>, wherein the content of the water-soluble compound is from 0.5 parts by mass to 50 parts by mass with respect to a total content of 100 parts by mass of the 2-cyanoacrylate compound and the water-soluble compound.
<3-6> The easily water-disintegrable adhesive composition according to any one of <3-1> to <3-5>, wherein the 2-cyanoacrylate compound is an alkyl-2-cyanoacrylate compound, or a 2-cyanoacrylate compound having an ether bond, a carbonate bond, or a sulfonyl bond.
<3-7> The easily water-disintegrable adhesive composition according to any one of <3-1> to <3-6>, wherein the 2-cyanoacrylate compound is at least one compound selected from the group consisting of ethyl-2-cyanoacrylate, ethoxyethyl-2-cyanoacrylate, methoxyethyl-2-cyanoacrylate, methoxypropoxypropyl-2-cyanoacrylate, tetrahydrofurfuryl-2-cyanoacrylate, glycerol carbonate-2-cyanoacrylate, sulforanylmethyl-2-cyanoacrylate, and methoxyethoxyethyl-2-cyanoacrylate.
<3-8> The easily water-disintegrable adhesive composition according to any one of <3-1> to <3-7>, wherein the water-soluble compound is at least one compound selected from the group consisting of ethylene carbonate, dimethyl sulfone, sulfolane, $\gamma$-butyrolactone, propylene carbonate, triethylene glycol dimethyl ether, tetraethylene glycol dimethyl ether, polyoxyalkylene alkyl ether, polyoxyalkylene dialkyl ether, polyoxyalkylene acetate, polyoxyalkylene diacetate, and fatty acid polyoxyethylene glycerol borate.
<3-9> The easily water-disintegrable adhesive composition according to any one of <3-1> to <3-8>, which is for temporary fixation.
<3-10> The easily water-disintegrable adhesive composition according to any one of <3-1> to <3-9>, which is for a teaching material.

According to the invention, an easily water-disintegrable adhesive composition which, after being cured, can be easily peeled off or removed with water as compared to an adhesive composition containing only a corresponding cyanoacrylate compound, can be provided.
Descriptions of requirements below may be made on the basis of a representative embodiment of the invention; however, the invention is not restricted to such an embodiment. In the present specification, those numerical ranges that are stated with "to" each denote a range that includes the numerical values stated before and after "to" as the lower limit value and the upper limit value, respectively.
In a set of numerical ranges that are stated in a stepwise manner in the present specification, the upper limit value or the lower limit value of one numerical range may be replaced with the upper limit value or the lower limit value of other numerical range. Further, in a numerical range stated in the present specification, the upper limit value or the lower limit value of the numerical range may be replaced with any relevant value indicated in the section of Examples.
In the invention, "% by mass" and "% by weight" have the same meaning, and "parts by mass" and "parts by weight" have the same meaning.
In the invention, a combination of two or more preferred modes is a more preferred mode.
The contents of the invention will now be described in detail.

(Easily Water-Disintegrable Adhesive Composition)

A first embodiment of the easily water-disintegrable adhesive composition of the invention (hereinafter, also simply referred to as "adhesive composition") is an adhesive composition containing a 2-cyanoacrylate compound and a water-soluble compound, wherein a cured product of the adhesive composition has a water absorption rate of 5% or higher when immersed in 40°C water for 24 hours.
The present inventors intensively studied to discover that, by adopting the above-described constitution, an easily water-disintegrable adhesive composition which, after being cured, can be easily peeled off or removed with water, can be provided.
The action mechanism of excellent effect attributed to the constitution is not clear; however, it is presumed as follows.
It is presumed that, by incorporating a water-soluble compound and controlling a cured product of the adhesive composition to have a water absorption rate of 5% or higher when immersed in 40°C water for 24 hours, embrittlement and disintegration of the cured product, which are caused by deformation associated with water absorption and swelling of the cured product or elution of the water-soluble compound, as well as permeation of water into an adhesive interface and a reduction in the adhesive strength are made likely to occur, as a result of which excellent post-curing peelability or removability with water (hereinafter, also referred to as "ease of disintegration with water") is attained.
The first embodiment of the adhesive composition of the invention has an excellent ease of disintegration with water and, therefore, can not only be easily peeled off or removed with hot water or pressurized hot water in a short period, but also be peeled off or removed by, for example, immersion in water having a temperature in a range of from a normal temperature (from 15°C to 25°C) to a temperature of lukewarm water (from 30°C to 45°C).
A second embodiment of the easily water-disintegrable adhesive composition of the invention is an adhesive composition containing a 2-cyanoacrylate compound and a water-soluble compound, wherein the water-soluble compound has a solubility parameter of from 8.0 $(cal/cm^3)^{0.5}$ to 23.4 $(cal/cm^3)^{0.5}$.
The present inventors intensively studied to discover that, by adopting the above-described constitution, an easily water-disintegrable adhesive composition which, after being cured, can be easily peeled off or removed with water, can be provided.
The action mechanism of excellent effect attributed to the constitution is not clear; however, it is presumed as follows.
It is presumed that, by incorporating a water-soluble compound that can be dissolved in a 2-cyanoacrylate compound and has a solubility parameter of from 8.0 $(cal/cm^3)^{0.5}$ to 23.4 $(cal/cm^3)^{0.5}$, an excellent compatibility is attained between the 2-cyanoacrylate compound and the water-soluble compound in an adhesive composition, so that, after curing of the adhesive composition, the water-soluble compound and the 2-cyanoacrylate compound are sufficiently dispersed in the resulting polymer and, with initiation of dissolution of the water-soluble compound into water upon contact with water, not only an excellent permeability of water into this cured product is attained, but also embrittlement of the cured product, which is caused by deformation associated with water absorption and swelling of the cured product or elution of the water-soluble compound, as well as disintegration of the cured product with a slight external force occur, and water permeates into an adhesive interface and the adhesive strength is thereby reduced, as a result of which excellent post-curing peelability or removability with water (hereinafter, also referred to as "ease of disintegration with water") is attained.
The second embodiment of the adhesive composition of the invention has an excellent ease of disintegration with water and, therefore, can not only be easily peeled off or removed with hot water or pressurized hot water in a short period, but also be peeled off or removed by, for example, immersion in water having a temperature in a range of from a normal temperature (from 15°C to 25°C) to a temperature of lukewarm water (from 30°C to 45°C).
A third embodiment of the easily water-disintegrable adhesive composition of the invention is an adhesive composition containing a 2-cyanoacrylate compound and a water-soluble compound, wherein a cured product of the adhesive composition has a total light transmittance of 80% or higher as measured in accordance with JIS K7361-1, and the cured product has a total light transmittance of 50% or lower as measured in accordance with JIS K7361-1 after being immersed in 40°C water for 24 hours.
The present inventors intensively studied to discover that, by adopting the above-described constitution, an easily water-disintegrable adhesive composition which, after being cured, can be easily peeled off or removed with water, can be provided.
The action mechanism of excellent effect attributed to the constitution is not clear; however, it is presumed as follows.
It is presumed that, by incorporating a water-soluble compound and controlling a cured product of the adhesive composition to have a total light transmittance of 80% or higher as measured in accordance with JIS K7361-1 and to have a total light transmittance of 50% or lower as measured in accordance with JIS K7361-1 after being immersed in 40°C water for 24 hours, not only deformation and disintegration of the cured product caused by water absorption and

swelling but also permeation of water into an adhesive interface and a reduction in the adhesive strength are made likely to occur, as a result of which excellent post-curing peelability or removability with water (hereinafter, also referred to as "ease of disintegration with water") is attained.

The third embodiment of the adhesive composition of the invention has an excellent ease of disintegration with water and, therefore, can not only be easily peeled off or removed with hot water or pressurized hot water in a short period, but also be peeled off or removed by, for example, immersion in water having a temperature in a range of from a normal temperature (from 15°C to 25°C) to a temperature of lukewarm water (from 30°C to 45°C).

Requirements of the invention will now each be described in detail. In the following descriptions, a simple term "the adhesive composition of the invention" or "the easily water-disintegrable adhesive composition of the invention" corresponds to all of the first to the third embodiments of the easily water-disintegrable adhesive composition of the invention.

<Water Absorption Rate (40°C)>

In the first embodiment of the adhesive composition of the invention, a cured product of the adhesive composition has a water absorption rate of 5% or higher when immersed in 40°C water for 24 hours and, from the standpoint of the peelability with water, the water absorption rate is preferably 10% or higher, more preferably 20% or higher.

In the second or the third embodiment of the adhesive composition of the invention, from the standpoint of the peelability with water, a cured product of the adhesive composition has a water absorption rate of preferably 5% or higher, more preferably 10% or higher, still more preferably 20% or higher, when immersed in 40°C water for 24 hours.

An upper limit of this water absorption rate is not particularly restricted; however, it is preferably 1,000% or lower.

<Water Absorption Rate (23°C)>

From the standpoint of the peelability with water having a normal temperature (from 15°C to 25°C) in particular, a cured product of the adhesive composition of the invention has a water absorption rate of preferably 5% or higher, more preferably 10% or higher, still more preferably 20% or higher, when immersed in 23°C water for 24 hours.

An upper limit of this water absorption rate is not particularly restricted; however, it is preferably 1,000% or lower.

<Elution Rate (40°C)>

From the standpoint of the peelability with water, a cured product of the adhesive composition of the invention has an elution rate of preferably 5% or higher when immersed in 40°C water for 24 hours.

An upper limit of this elution rate is not particularly restricted, and may be 100% or lower.

<Elution Rate (23°C)>

From the standpoint of the peelability with water having a normal temperature (from 15°C to 25°C) in particular, a cured product of the adhesive composition of the invention has an elution rate of preferably 2% or higher when immersed in 23°C water for 24 hours.

An upper limit of this elution rate is not particularly restricted, and may be 100% or lower.

<Methods of Measuring Water Absorption Rate and Elution Rate>

The water absorption rate and the elution rate are measured by the following respective methods.

About 4 g of the adhesive composition is poured into a polyethylene container of 50 mm in diameter, and from 3 μL to 4 μL of *N*,*N*-dimethyl-*p*-toluidine is added thereto, after which the resultant is stirred and then left to stand until the adhesive composition is completely cured, whereby a cured product of 50 mm in diameter is prepared.

Thereafter, the cured product is taken out of the container and cut into two semicircular test pieces, which are each used in tests and evaluations.

Subsequently, one of the thus prepared two semicircular test pieces is used for immersion in water (A), and the other test piece is used for pre-test comparison (B, not immersed in water).

The test piece A is immersed in 80 mL of distilled water in an atmosphere having a temperature of 23°C. This test piece is left to stand for 24 hours and subsequently taken out of distilled water, after which water on the surface is thoroughly wiped off, and the water absorption rate at 23°C and the elution rate at 23°C are calculated in accordance with the respective equations below.

In the same manner, the test piece A prepared with the same formulation is immersed in 80 mL of distilled water in an atmosphere having a temperature of 40°C. This test piece is left to stand for 24 hours and subsequently

taken out of distilled water, after which water on the surface is thoroughly wiped off, and the test piece is evaluated as a 40°C test.

The mass (a) of the test piece A prior to the water immersion test, the mass (b) of the test piece A after the water immersion test, the mass (c) of the test piece A after dehydration by 20-hour vacuum drying at 50°C followed by cooling back to 23°C, the mass (d) of the test piece B for pre-test comparison that has not been immersed in water, and the mass (e) of the test piece B after dehydration by 20-hour vacuum drying at 50°C followed by cooling back to 23°C are measured for each of 23°C test and 40°C test.

Using the thus obtained values of (a) to (e), the water absorption rate and the elution rate are calculated by the following equations.

$$\text{Water absorption rate (\%)}: ((b - c) - (a \times (d - e)/d))/(a - a \times (d - e/d)) \times 100$$

$$\text{Elution rate (\%)}: ((a - c) - (a \times (d - e)/d))/(a - a \times (d - e/d)) \times 100$$

<Total Light Transmittance (After Immersion at 40°C)>

In the third embodiment of the adhesive composition of the invention, a cured product of the adhesive composition has a total light transmittance of 50% or lower as measured in accordance with JIS K7361-1 after being immersed in 40°C water for 24 hours and, from the standpoint of the peelability with water, the total light transmittance is preferably 40% or lower, more preferably 30% or lower.

In the first or the second embodiment of the adhesive composition of the invention, from the standpoint of the peelability with water, a cured product of the adhesive composition has a total light transmittance of preferably 50% or lower, more preferably 40% or lower, still more preferably 30% or lower, as measured in accordance with JIS K7361-1 after being immersed in 40°C water for 24 hours.

A lower limit value thereof is preferably 0% or higher.

<Total Light Transmittance (After Immersion at 23°C)>

From the standpoint of the peelability with water having a normal temperature (from 15°C to 25°C) in particular, the total light transmittance of a cured product of the adhesive composition of the invention, which is measured in accordance with JIS K7361-1 after the cured product is immersed in 23°C water for 24 hours, is preferably 70% or lower, more preferably 40% or lower, still more preferably 30% or lower. A lower limit value thereof is preferably 0% or higher.

<Total Light Transmittance (Before Immersion)>

From the standpoint of the peelability with water having a normal temperature (from 15°C to 25°C) in particular, the total light transmittance of a cured product of the adhesive composition of the invention, which is measured at 23°C or 40°C in accordance with JIS K7361-1, is preferably 80% or higher, more preferably 85% or higher. An upper limit value thereof may be 100% or lower.

<Haze Value (After Immersion at 40°C)>

From the standpoint of the peelability with water, the haze value of a cured product of the adhesive composition of the invention, which is measured in accordance with JIS K7136 after the cured product is immersed in 40°C water for 24 hours, is preferably 95% or higher, more preferably 98% or higher, still more preferably 99% or higher.

An upper limit of this haze value is not particularly restricted, and may be 100% or lower.

<Haze Value (After Immersion at 23°C)>

From the standpoint of the peelability with water having a normal temperature (from 15°C to 25°C) in particular, the haze value of a cured product of the adhesive composition of the invention, which is measured in accordance with JIS K7136 after the cured product is immersed in 23°C water for 24 hours, is preferably 90% or higher, more preferably 95% or higher, still more preferably 98% or higher.

An upper limit of this haze value is not particularly restricted, and may be 100% or lower.

<Methods of Measuring Total Light Transmittance and Haze>

The total light transmittance and the haze are measured by the following respective methods.
About 4 g of the adhesive composition is poured into a polyethylene container of 50 mm in diameter, and from 3 μL to 4 μL of *N*,*N*-dimethyl-*p*-toluidine is added thereto, after which the resultant is stirred and then left to stand until the adhesive composition is completely cured, whereby a cured product of 50 mm in diameter is prepared.
Thereafter, the cured product is taken out of the container and cut into two semicircular test pieces, which are each used in tests and evaluations.
Subsequently, one of the thus prepared two semicircular test pieces is tested as a test piece (A).
First, the total light transmittance of the test piece A is measured in accordance with JIS K7361-1 using a haze meter (NHD-2000, manufactured by Nippon Denshoku Industries Co., Ltd.).
Next, the haze of the test piece A is measured in accordance with JIS K7136 using a haze meter (NHD-2000, manufactured by Nippon Denshoku Industries Co., Ltd.) and calculated by the following equation:

$$\text{Haze (\%)} = (\text{Total light transmittance} - \text{Parallel light transmittance})/\text{Total light transmittance}$$

In both of these tests, the test piece is measured in a state of being pressed perpendicular to the light source of the haze meter.
After the measurement, the test piece A is immersed in 80 mL of distilled water at a temperature of 23°C. This test piece is left to stand for 24 hours and subsequently taken out of distilled water, after which water on the surface is thoroughly wiped off. Thereafter, the total light transmittance (after immersion at 23°C) and the haze value (after immersion at 23°C) are measured by the same methods as in the above-described measurement of total light transmittance and measurement of haze value.
In the same manner, the test piece A prepared with the same formulation is immersed in 80 mL of distilled water at a temperature of 40°C. This test piece is left to stand for 24 hours and subsequently taken out of distilled water, after which water on the surface is thoroughly wiped off. Thereafter, the total light transmittance (after immersion at 40°C) and the haze value (after immersion at 40°C) are measured by the same methods as in the above-described measurement of total light transmittance and measurement of haze value.

<2-Cyanoacrylate Compound>

The adhesive composition of the invention contains a 2-cyanoacrylate compound.
As the 2-cyanoacrylate compound, any 2-cyanoacrylate compound that is generally used in this type of adhesive composition can be used with no particular restriction. Examples of such a 2-cyanoacrylate compound include methyl, ethyl, chloroethyl, *n*-propyl, *i*-propyl, allyl, propargyl, *n*-butyl, *i*-butyl, *n*-pentyl, *n*-hexyl, cyclohexyl, phenyl, tetrahydrofuryl, tetrahydrofurfuryl, heptyl, 2-ethylhexyl, *n*-octyl, 2-octyl, *n*-nonyl, oxononyl, *n*-decyl, *n*-dodecyl, methoxyethyl, methoxypropyl, methoxyisopropyl, methoxybutyl, ethoxyethyl, ethoxypropyl, ethoxyisopropyl, propoxymethyl, propoxyethyl, isopropoxyethyl, propoxypropyl, butoxymethyl, butoxyethyl, butoxypropyl, butoxyisopropyl, butoxybutyl, methoxyethoxyethyl, 2,2,2-trifluoroethyl, hexafluoroisopropyl, phenylethyl, phenoxyethyl, alkoxypolyethylene oxyethyl, alkoxy polypropylene oxypropyl, glycerol carbonate, 2-sulforanylmethyl, and 3-sulforanylmethyl esters of 2-cyanoacrylic acid.
From the standpoint of the ease of disintegration with water, the 2-cyanoacrylate compound is preferably an alkyl-2-cyanoacrylate compound, or a 2-cyanoacrylate compound having an ether bond, a carbonate bond or a sulfonyl bond, more preferably a 2-cyanoacrylate compound having an ether bond, a carbonate bond or a sulfonyl bond, particularly preferably a 2-cyanoacrylate compound having an ether bond or a sulfonyl bond.
Thereamong, from the standpoint of the ease of disintegration with water, the 2-cyanoacrylate compound is preferably at least one compound selected from the group consisting of ethyl-2-cyanoacrylate, ethoxyethyl-2-cyanoacrylate, methoxyethyl-2-cyanoacrylate, methoxypropoxypropyl-2-cyanoacrylate, tetrahydrofurfuryl-2-cyanoacrylate, glycerol carbonate-2-cyanoacrylate, sulforanylmethyl-2-cyanoacrylate, and methoxyethoxyethyl-2-cyanoacrylate.

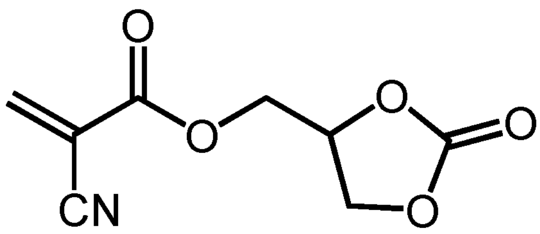

glycerol carbonate-2-cyanoacrylate

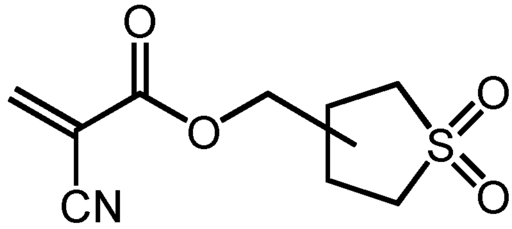

sulforanylmethyl-2-cyanoacrylate

From the standpoints of the ease of disintegration with water and the dispersibility of the water-soluble compound, the solubility parameter (SP value) of the 2-cyanoacrylate compound is preferably from 8.0 $(cal/cm^3)^{0.5}$ to 23.4 $(cal/cm^3)^{0.5}$, more preferably from 10.0 $(cal/cm^3)^{0.5}$ to 23.4 $(cal/cm^3)^{0.5}$, still more preferably from 10.0 $(cal/cm^3)^{0.5}$ to 15.0 $(cal/cm^3)^{0.5}$, particularly preferably from 10.0 $(cal/cm^3)^{0.5}$ to 14.0 $(cal/cm^3)^{0.5}$, most preferably from 10.0 $(cal/cm^3)^{0.5}$ to 12.0 $(cal/cm^3)^{0.5}$.

In the invention, the solubility parameter (SP value) is a value determined by the calculation method described by R. F. Fedors in "Polymer Engineering and Science" 14(2), 147 (1974). Specifically, the solubility parameter (SP value) is determined by the calculation method represented by the following equation (3). It is noted here that 2.0455 $(cal/cm^3)^{0.5}$ is equal to 1 $MPa^{0.5}$.

$$\delta = \sqrt{\frac{\sum \Delta E_{vap}}{\sum V}} \qquad (3)$$

δ: SP value $((cal/cm^3)^{1/2})$
ΔEvap: molar heat of vaporization (cal/mol) of each atomic group
V: molar volume $(cm^3/mol)$ of each atomic group

When two or more 2-cyanoacrylate compounds are used in combination, the solubility parameter (SP value) is calculated by the following equation:

$$(\text{SP value of mixture})^2 = (\text{Volume fraction of component 1}) \times (\text{SP value of component 1})^2 + (\text{Volume fraction of component 2}) \times (\text{SP value of component 2})^2 + \cdots$$

In the adhesive composition of the invention, a 2-cyanoacrylate compound may be used singly, or two or more kinds thereof may be used in combination.

From the standpoints of the ease of disintegration with water as well as the adhesiveness and the curability, the content of the 2-cyanoacrylate compound(s) in the adhesive composition of the invention is preferably from 40% by mass to 99.5% by mass, more preferably from 50% by mass to 99.5% by mass, still more preferably from 60% by mass to 90% by mass, particularly preferably from 70% by mass to 85% by mass, with respect to a total mass of the adhesive composition.

<Water-Soluble Compound>

The adhesive composition of the invention contains a water-soluble compound.

The water-soluble compound is preferably one that can be dissolved in the above-described 2-cyanoacrylate compound.

In the invention, "the water-soluble compound can be dissolved in the 2-cyanoacrylate compound" means that, when 1 part by mass of the water-soluble compound to be used is mixed and stirred with 100 parts by mass of the 2-cyanoacrylate compound to be used, no phase separation is visually observed and a homogeneous mixture can be formed.

Further, in the invention, the term "water-soluble compound" means a compound that is miscible with water at an arbitrary mixing ratio to yield a solution, or has a solubility in water (25°C) of not less than 1 g/100 g.

In the second embodiment of the adhesive composition of the invention, the water-soluble compound has a solubility parameter (SP value) of from 8.0 $(cal/cm^3)^{0.5}$ to 23.4 $(cal/cm^3)^{0.5}$ and, from the standpoints of the ease of disintegration with water and the compatibility with the 2-cyanoacrylate compound, the solubility parameter (SP value) is preferably from 8.3 $(cal/cm^3)^{0.5}$ to 15.0 $(cal/cm^3)^{0.5}$, more preferably from 8.3 $(cal/cm^3)^{0.5}$ to 14.0 $(cal/cm^3)^{0.5}$, particularly preferably from 9.0 $(cal/cm^3)^{0.5}$ to 14.0 $(cal/cm^3)^{0.5}$.

In the first or the third embodiment of the adhesive composition of the invention, from the standpoints of the ease of disintegration with water and the compatibility with the 2-cyanoacrylate compound, the solubility parameter (SP) value of the water-soluble compound is preferably from 8.0 $(cal/cm^3)^{0.5}$ to 23.4 $(cal/cm^3)^{0.5}$, more preferably from 8.3 $(cal/cm^3)^{0.5}$ to 15.0 $(cal/cm^3)^{0.5}$, still more preferably from 8.3 $(cal/cm^3)^{0.5}$ to 14.0 $(cal/cm^3)^{0.5}$, particularly preferably from 9.0 $(cal/cm^3)^{0.5}$ to 14.0 $(cal/cm^3)^{0.5}$.

From the standpoints of the peelability with water and the disintegration rate, the higher the SP value of the water-soluble compound, the more preferred it is.

The water-soluble compound used in the invention may be a low-molecular-weight compound or a high-molecular-weight compound. The low-molecular-weight compound preferably has a molecular weight of less than 1,000, while the high-molecular-weight compound has a weight-average molecular weight of preferably 1,000 or higher, more preferably from 1,000 to 1,000,000.

The number-average molecular weight (Mn) and the weight-average molecular weight (Mw) of the high-molecular-weight compound used in the invention are determined by gel permeation chromatography (GPC).

The water-soluble compound is not particularly restricted; however, from the standpoints of the ease of disintegration with water and the compatibility with the 2-cyanoacrylate compound, the water-soluble compound is preferably a compound having at least one bond selected from the group consisting of an ester bond, a carbonate bond and a sulfonyl bond, more preferably a compound having at least one bond selected from the group consisting of a carbonate bond and a sulfonyl bond.

Preferred examples of a water-soluble high-molecular-weight compound include polyacrylic acid, polyacrylate, cellulose acetate, and cellulose acetate butyrate.

Further, as the water-soluble compound, from the standpoints of the ease of disintegration with water and the viscosity, it is also preferred to use a low-molecular-weight compound and a high-molecular weight compound in combination.

Thereamong, from the standpoints of the ease of disintegration with water and the compatibility with the 2-cyanoacrylate compound, the water-soluble compound is preferably at least one compound selected from the group consisting of ethylene carbonate, dimethyl sulfone, sulfolane, $\gamma$-butyrolactone, propylene carbonate, triethylene glycol dimethyl ether, tetraethylene glycol dimethyl ether, ethylene glycol diethyl ether, diethylene glycol diethyl ether, ethylene glycol monomethyl ether acetate, polyoxyalkylene alkyl ether, polyoxyalkylene dialkyl ether, polyoxyalkylene acetate, polyoxyalkylene diacetate, and fatty acid polyoxyethylene glycerol borate, more preferably at least one compound selected from the group consisting of ethylene carbonate, dimethyl sulfone, sulfolane, propylene carbonate, triethylene glycol dimethyl ether, tetraethylene glycol dimethyl ether, polyoxyalkylene alkyl ether, polyoxyalkylene dialkyl ether, polyoxyalkylene acetate, polyoxyalkylene diacetate, and fatty acid polyoxyethylene glycerol borate.

Further, from the versatility standpoint, the water-soluble compound is preferably at least one compound selected from the group consisting of ethylene carbonate, $\gamma$-butyrolactone, dimethyl sulfone, propylene carbonate, triethylene glycol dimethyl ether, tetraethylene glycol dimethyl ether, ethylene glycol diethyl ether, diethylene glycol diethyl ether, ethylene glycol monomethyl ether acetate, polyoxyalkylene alkyl ether, polyoxyalkylene dialkyl ether, polyoxyalkylene acetate, and polyoxyalkylene diacetate.

As the above-described polyoxyalkylene alkyl ether, polyoxyalkylene dialkyl ether, polyoxyalkylene acetate, and polyoxyalkylene diacetate, for example, compounds having a structure represented by the following Formula (1) are preferred.

$$R\text{-}(OCH_2CHX)_n(OCH_2CH_2)_m\text{-}OR'$$

(wherein, R and R' each represent a hydrogen atom, or a linear or branched alkyl or alkyl acetate group having from 1 to 20 carbon atoms; X represents an alkyl group having from 1 to 10 carbon atoms; n represents an integer of 0 to 20; and m represents an integer of 0 to 20).

Preferred examples of the above-described fatty acid polyoxyethylene glycerol borate include EMULBON (registered trademark) T-20 (polyoxyethylene glycerol borate-laurate), EMULBON T-40 (polyoxyethylene glycerol borate-palmitate), EMULBON T-60 (polyoxyethylene glycerol borate-stearate), EMULBON T-66 (polyoxyethylene glycerol borate-stearate), EMULBON T-80 (polyoxyethylene glycerol borate-oleate), EMULBON T-83 (polyoxyethylene glycerol borate-oleate), and EMULBON T-160 (polyoxyethylene glycerol borate isostearate), which are manufactured by TOHO Chemical Industry Co., Ltd.

In the adhesive composition of the invention, a water-soluble compound may be used singly, or two or more kinds thereof may be used in combination.

From the standpoint of the ease of disintegration with water, the content of the water-soluble compound(s) in the adhesive composition of the invention is preferably from 0.5% by mass to 50% by mass, more preferably from 1% by mass to 40% by mass, still more preferably from 5% by mass to 35% by mass, particularly preferably from 10% by mass to 30% by mass, with respect to a total mass of the adhesive composition.

<Other Components>

The adhesive composition of the invention may contain other component(s) in addition to the 2-cyanoacrylate compound and the water-soluble compound.

As the other components, a stabilizer, a curing accelerator, a plasticizer, a thickening agent, particles, a colorant, a flavor, a solvent, and a strength improver and the like that are conventionally incorporated into an adhesive composition containing a 2-cyanoacrylic acid ester can be used according to the respective intended purposes in appropriate amounts within a range that does not impair the curability, the adhesive strength and the like of the adhesive composition.

Examples of the stabilizer include: (1) anionic polymerization inhibitors, for example, sulfur dioxide, aliphatic sulfonic acids such as methanesulfonic acid, aromatic sulfonic acids such as *p*-toluenesulfonic acid, boron trifluoride complexes such as boron trifluoride methanol and boron trifluoride diethyl ether, $HBF_4$, and trialkyl borate; and (2) radical polymerization inhibitors, such as hydroquinone, hydroquinone monomethyl ether, *t*-butyl catechol, catechol, and pyrogallol. These stabilizers may be used singly, or in combination of two or more kinds thereof.

As the curing accelerator, any curing accelerator may be used as long as it facilitates anionic polymerization of a 2-cyanoacrylate-based adhesive composition. Examples of the curing accelerator include polyether compounds, calixarenes, thiacalixarenes, pyrogallolarenes, and onium salts. These curing accelerators may be used singly, or in combination of two or more kinds thereof.

Examples of the plasticizer include acetyl triethyl citrate, acetyl tributyl citrate, dimethyl adipate, diethyl adipate, dimethyl sebacate, dimethyl phthalate, diethyl phthalate, dibutyl phthalate, diisodecyl phthalate, dihexyl phthalate, diheptyl phthalate, dioctyl phthalate, bis(2-ethylhexyl) phthalate, diisononyl phthalate, diisotridecyl phthalate, dipentadecyl phthalate, dioctyl terephthalate, diisononyl isophthalate, decyl toluate, bis(2-ethylhexyl) camphorate, 2-ethylhexyl cyclohexyl carboxylate, diisobutyl fumarate, diisobutyl maleate, caproic acid triglyceride, 2-ethylhexyl benzoate and dipropylene glycol dibenzoate. Among these plasticizers, acetyl tributyl citrate, dimethyl adipate, dimethyl phthalate, 2-ethylhexyl benzoate and dipropylene glycol dibenzoate are preferred since they have favorable compatibility with the 2-cyanoacrylate compound and a high plasticization efficiency. These plasticizers may be used singly, or in combination of two or more kinds thereof.

Examples of the thickening agent include polymethyl methacrylate, copolymers of methyl methacrylate and an acrylate, copolymers of methyl methacrylate and other methacrylate, acrylic rubbers, polyvinyl acetates, polyvinyl chlorides, polyurethane resins, polyamide resins, polystyrenes, cellulose esters, polyalkyl-2-cyanoacrylates, and ethylene-vinyl acetate copolymers. These thickening agents may be used singly, or in combination of two or more kinds thereof.

The particles that may be incorporated into the adhesive composition are used for adjusting the thickness of an adhesive layer that is formed when the adhesive composition is used.

The average particle size of the particles is preferably from 10 μm to 200 μm, more preferably from 15 μm to 200 μm, still more preferably from 15 μm to 150 μm.

The material of the particles is not particularly restricted as long as it is insoluble in the 2-cyanoacrylate compound to be used and does not cause alteration such as polymerization. Examples of the material include: thermoplastic resins, such as polyethylenes, polypropylenes, polymethylpentenes, acrylic resins, polyvinyl chlorides, polytetrafluoroethylenes, polyethylene terephthalates, polybutylene terephthalates, polysulfones, and polyphenylene oxides; cross-linked resins, such as unsaturated polyesters, divinylbenzene polymers, divinylbenzene-styrene copolymers, divinylbenzene-(meth)acrylate copolymers, and diallyl phthalate polymers; inorganic compounds, such as spherical silica, glass beads, and glass fibers; silicone compounds; and organic-inorganic composite particles containing an organic polymer

skeleton and a polysiloxane skeleton.

The content of the particles is not particularly restricted; however, when the content of the 2-cyanoacrylate compound is 100 parts by mass, the content of the particles is preferably from 0.1 parts by mass to 10 parts by mass, more preferably from 1 part by mass to 5 parts by mass, still more preferably from 1 part by mass to 3 parts by mass. By controlling the content of the particles to be in the above-described range of from 0.1 parts by mass to 10 parts by mass, the effects of the particles on the curing rate and the adhesive strength can be reduced.

In the invention, the average particle size of the particles is a volume-based average value determined using a laser diffraction-type particle size distribution analyzer.

The easily water-disintegrable adhesive composition of the invention can be used in various applications with no particular restriction.

Particularly, the easily water-disintegrable adhesive composition of the invention can be simply peeled off or removed with water from a part bonded by the adhesive composition or a part where the adhesive composition unnecessarily adhered and has been cured; therefore, the easily water-disintegrable adhesive composition of the invention can be suitably used for, for example, temporary fixation or a teaching material. Since the easily water-disintegrable adhesive composition of the invention can be peeled off or removed by, for example, immersion in water having a temperature in a range of from a normal temperature (from 15°C to 25°C) to a temperature of lukewarm water (from 30°C to 45°C), the easily water-disintegrable adhesive composition of the invention can be easily peeled off or removed even if, for example, it adhered to and was cured on an unwanted place such as a finger. Moreover, the easily water-disintegrable adhesive composition of the invention can be peeled off or removed with water having a temperature in a range of from a normal temperature to a temperature of lukewarm water; therefore, when the adhesive composition is used for temporary fixation in an industrial application, the amount of heat required for peeling can be reduced, so that a cost cut can be achieved.

Examples of the temporary fixation in an industrial application include temporary fixation between an electronic material such as a semiconductor wafer, an optical material or the like and a jig such as a polishing surface plate.

Further, adherends to be bonded by the easily water-disintegrable adhesive composition of the invention are not particularly restricted. The adherends may be made of an inorganic compound, an organic compound, or an inorganic-organic composite, and may be the same material or different materials. The easily water-disintegrable adhesive composition of the invention is capable of bonding solid materials of any shape.

The easily water-disintegrable adhesive composition of the invention can also be suitably used in a temporary fixation method.

That is, the temporary fixation method of the invention includes the following steps in the order mentioned:

the step of mixing a 2-cyanoacrylate compound and a water-soluble compound to prepare the easily water-disintegrable adhesive composition of the invention (this step is hereinafter referred to as "adhesive composition preparation step");

the step of forming an adhesive layer made of the thus obtained adhesive composition between plural members (this step is hereinafter referred to as "adhesive layer-forming step");

the step of curing the adhesive layer thus formed between the plural members to obtain a cured product and to thereby temporarily bond the plural members using the cured product (this step is hereinafter referred to as "temporary bonding step"); and

the step of disintegrating the cured product by bringing it into contact with water so as to separate the plural members from each other (this step is hereinafter referred to as "separation step").

The temporary fixation method of the invention may further include the step of processing the temporarily bonded members into a desired shape (this step is hereinafter referred to as "processing step") between the temporary bonding step and the separation step.

The steps included in the temporary fixation method of the invention will now be described.

The adhesive composition preparation step is the step of mixing a 2-cyanoacrylate compound and a water-soluble compound to prepare the easily water-disintegrable adhesive composition of the invention.

A 2-cyanoacrylate compound and a water-soluble compound that can be used in this step are as described above.

In this step, a 2-cyanoacrylate and a water-soluble compound are mixed and stirred to obtain a homogeneous liquid, whereby the adhesive composition can be prepared. A method of mixing the 2-cyanoacrylate and the water-soluble compound is not particularly restricted, and the adhesive composition can be prepared by leaving a mixed solution of the 2-cyanoacrylate and the water-soluble compound at a temperature of from room temperature to 60°C, or by mixing the 2-cyanoacrylate and the water-soluble compound using a stirrer or the like.

The adhesive layer-forming step is the step of forming an adhesive layer made of the thus obtained adhesive composition on at least one of plural members, or between the plural members.

The adhesive layer-forming step may be, for example, the step of coating the bonding surface of one or plural members to be fixed with the adhesive composition, placing other member on the thus coated part, and repeatedly performing these operations. For the coating operation in this mode, for example, a dispenser, a coater, a roll, a brush, a spatula, a spray, or a coating jig may be used in accordance with the shapes of the adherends. Alternatively, a method of immersing the adherends, which have been disposed in layers in advance, into the adhesive composition and thereby allowing the adhesive composition to impregnate into gaps between the adherends may be employed. The adherends are not particularly restricted as long as they are not deteriorated with the adhesive composition or water having a temperature of from a normal temperature to a temperature of lukewarm water and, for example, metals, ceramics, and plastics can be used.

The temporary bonding step is the step of curing the thus applied adhesive composition between the plural members to obtain a cured product and to thereby temporarily bond the plural members using the cured product.

The adhesive composition can be instantaneously cured with a trace amount of moisture; therefore, a cured product can be obtained without having to arrange a special apparatus or set a special condition. In order to facilitate a curing reaction, the curing may be performed with heating in a range that does not affect the adherends, for example, in a range of from 40°C to about 100°C.

The separation step is the step of disintegrating the cured product by bringing it into contact with water so as to separate the plural members from each other.

In the separation step, examples of a method of bringing the cured product into contact with water include a method of immersing the adherends in water, a method of exposing the adherends to running water, and a method of spraying water to the adherends. The treatment time varies depending on the water contact method and the heating temperature; however, it is preferably in a range of, for example, from 10 seconds to 3 minutes. It is also preferred to facilitate the separation by mechanically applying an external force to the adherends or ultrasonicating the adherends at the time of bringing the adherends into contact with water having a temperature of from a normal temperature to a temperature of lukewarm water.

The processing step is the step of processing the thus temporarily bonded members into a desired shape, which is performed between the above-described temporary bonding step and the above-described separation step. In the processing step, the members may be processed into a desired shape by cutting, grinding, polishing, etching, or the like.

## EXAMPLES

The invention will now be concretely described by way of Examples thereof. The invention is, however, not restricted to the below-described Examples. Hereinafter, unless otherwise specified, "part(s)" and "%" mean "part(s) by mass" and "% by mass", respectively.

### 1. Test Method

#### 1-1. Preparation of Test Pieces

(Examples 1 to 15 and Comparative Examples 1 to 5)

Adhesive compositions of Examples 1 to 11 and Comparative Examples 1 to 5 were prepared by adding the respective water-soluble compounds shown in Table 1 or 2 to the respective 2-cyanoacrylate compounds shown in Table 1 or 2 in the respective amounts shown in Table 1 or 2, and subsequently stirring the resultants to homogeneity. About 4 g of each of the thus obtained adhesive compositions was poured into a polyethylene container of 50 mm in diameter, and from 3 μL to 4 μL of *N*,*N*-dimethyl-*p*-toluidine was added thereto, after which the resultant was stirred and then left to stand until the adhesive composition was completely cured, whereby a cured product having a diameter of 50 mm and a thickness in a range of 16 ± 5 mm was prepared. Thereafter, the cured product was taken out of the container and cut into two semicircular test pieces, which were used in the following test and evaluations.

#### 1-2. Water Immersion Test

One of the test pieces prepared in the above 1-1 was used for immersion in water (A), and the other test piece was used for pre-test comparison (B, not immersed in water).

The test piece A was immersed in 80 mL of distilled water in an atmosphere having a temperature of 23°C. This test piece was left to stand for 24 hours and subsequently taken out of distilled water, after which water on the surface was thoroughly wiped off, and the test piece was evaluated as a 23°C test.

In the same manner, the test piece A prepared with the same formulation was immersed in 80 mL of distilled

water in an atmosphere having a temperature of 40°C. This test piece was left to stand for 24 hours and subsequently taken out of distilled water, after which water on the surface was thoroughly wiped off, and the test piece was evaluated as a 40°C test.

2. Evaluation Methods

(1) Water Absorption Rate and Elution Rate

The mass (a) of the test piece A prior to the water immersion test, the mass (b) of the test piece A after the water immersion test, the mass (c) of the test piece A after dehydration by 20-hour vacuum drying at 50°C, the mass (d) of the test piece B for pre-test comparison that was not immersed in water, and the mass (e) of the test piece B after dehydration by 20-hour vacuum drying at 50°C were measured for each of the 23°C test and the 40°C test.

Using the thus obtained values of (a) to (e), the water absorption rate and the elution rate were calculated by the following equations. The results thereof are as shown in Table 1.

$$\text{Water absorption rate (\%)}: ((b - c) - (a \times (d - e)/d))/(a - a \times (d - e/d)) \times 100$$

$$\text{Elution rate (\%)}: ((a - c) - (a \times (d - e)/d))/(a - a \times (d - e/d)) \times 100$$

(2) Total Light Transmittance and Haze

The total light transmittance was measured in accordance with JIS K7361-1 using a haze meter (NHD-2000, manufactured by Nippon Denshoku Industries Co., Ltd.).

The haze was measured in accordance with JIS K7136 using a haze meter (NHD-2000, manufactured by Nippon Denshoku Industries Co., Ltd.) and calculated by the following equation:

$$\text{Haze (\%)} = (\text{Total light transmittance} - \text{Parallel light transmittance})/\text{Total light transmittance}$$

As a test piece, the semicircular cured plate having a diameter of 50 mm and a thickness in a range of 16 ± 5 mm at a measurement point, which was prepared by the method described above in 1-1, was measured in a state of being pressed perpendicular to the light source of the haze meter.

First, the test piece prior to the immersion in water was measured and, after a water immersion test was performed in the same manner as described above, water on the surface was wiped off and the measurement was performed for this post-immersion test piece. The results thereof are as shown in Table 2.

(Table 1)

| | 2-cyanoacrylate compound | | Water-soluble compound | | | Water immersion at 23°C | | Water immersion at 40°C | |
|---|---|---|---|---|---|---|---|---|---|
| | Type | SP value $((cal/cm^3)^{0.5})$ | Type | SP value $((cal/cm^3)^{0.5})$ | Added amount (% by mass) | Water absorption rate (%) | Elution rate (%) | Water absorption rate (%) | Elution rate (%) |
| Example 1 | ethoxyethyl cyanoacrylate | 10.81 | sulfolane | 9.36 | 5 | 4.82 | 1.13 | 5.33 | 1.94 |
| Example 2 | ethoxyethyl cyanoacrylate | 10.81 | sulfolane | 9.36 | 10 | 6.16 | 1.63 | 10.6 | 6.11 |
| Example 3 | ethoxyethyl cyanoacrylate | 10.81 | sulfolane | 9.36 | 20 | 31.0 | 7.45 | 23.0 | 14.2 |
| Example 4 | ethoxyethyl cyanoacrylate | 10.81 | dimethyl sulfone | 8.45 | 5 | 5.70 | 0.259 | 9.43 | 3.39 |
| Example 5 | ethoxyethyl cyanoacrylate | 10.81 | ethylene carbonate | 11.20 | 10 | 3.92 | 3.13 | 6.69 | 9.51 |
| Example 6 | ethoxyethyl cyanoacrylate | 10.81 | ethylene carbonate | 11.20 | 8 | 5.54 | 3.79 | 8.27 | 8.93 |
| | | | dimethyl sulfone | 8.45 | 2 | | | | |
| Example 7 | ethoxyethyl cyanoacrylate | 10.81 | ethylene carbonate | 11.20 | 16 | 8.65 | 8.23 | 11.0 | 15.4 |
| | | | dimethyl sulfone | 8.45 | 4 | | | | |
| Example 8 | ethoxyethyl cyanoacrylate | 10.81 | ethylene carbonate | 11.20 | 7 | 5.19 | 3.42 | 5.74 | 7.63 |
| | | | sulfolane | 9.36 | 3 | | | | |
| Example 9 | methoxyethyl cyanoacrylate | 11.16 | sulfolane | 9.36 | 20 | 52.7 | 4.73 | 76.9 | 11.5 |
| Example 10 | methoxyethyl cyanoacrylate | 11.16 | dimethyl sulfone | 8.45 | 5 | 6.75 | 1.67 | 14.8 | 2.68 |
| Example 11 | methoxyethyl cyanoacrylate | 11.16 | ethylene carbonate | 11.20 | 20 | 5.64 | 6.75 | 6.88 | 11.6 |

(continued)

| | 2-cyanoacrylate compound | | Water-soluble compound | | | Water immersion at 23°C | | Water immersion at 40°C | |
|---|---|---|---|---|---|---|---|---|---|
| | Type | SP value $((cal/cm^3)^{0.5})$ | Type | SP value $((cal/cm^3)^{0.5})$ | Added amount (% by mass) | Water absorption rate (%) | Elution rate (%) | Water absorption rate (%) | Elution rate (%) |
| Example 12 | tetrahydrofurfuryl cyanoacrylate | 10.48 | sulfolane | 9.36 | 10 | 3.27 | 0.0323 | 17.8 | 1.12 |
| Example 13 | tetrahydrofurfuryl cyanoacrylate | 10.48 | sulfolane | 9.36 | 20 | 23.4 | 2.60 | 121 | 9.80 |
| Example 14 | ethyl cyanoacrylate | 11.35 | sulfolane | 9.36 | 40 | 23.6 | 4.37 | 74.3 | 7.32 |
| Example 15 | ethyl cyanoacrylate | 11.35 | ethylene carbonate | 11.20 | 40 | -0.298 | 8.3 | 9.83 | 14.1 |
| Comparative Example 1 | ethyl cyanoacrylate | 11.35 | - | - | - | 1.18 | 0.210 | 1.40 | 0.116 |
| Comparative Example 2 | ethoxyethyl cyanoacrylate | 10.81 | - | - | - | 2.83 | -0.586 | 3.90 | 0.550 |
| Comparative Example 3 | ethoxyethyl cyanoacrylate | 11.16 | biphenyl | 10.3 | 10 | 3.05 | 0.736 | 3.07 | 0.876 |
| Comparative Example 4 | tetrahydrofurfuryl cyanoacrylate | 10.48 | - | - | - | 1.70 | -0.283 | 3.99 | 0.238 |

(Table 2)

| | 2-cyanoacrylate compound | Water-soluble compound | | Water immersion at 23°C | | | | Water immersion at 40°C | | | |
|---|---|---|---|---|---|---|---|---|---|---|---|
| | | | | before water immersion | | after water immersion | | before water immersion | | after water immersion | |
| | | Type | Added amount (% by mass) | Haze (%) | Total light transmittance (%) | Haze (%) | Total light transmittance (%) | Haze (%) | Total light transmittance (%) | Haze (%) | Total light transmittance (%) |
| Example 2 | ethoxyethyl cyanoacrylate | sulfolane | 10 | 34.5 | 89.4 | 99.5 | 31.2 | 34.5 | 89.4 | 99.6 | 37.7 |
| Example 3 | ethoxyethyl cyanoacrylate | sulfolane | 20 | 43.0 | 87.8 | 99.5 | 28.8 | 43.0 | 87.8 | 99.5 | 32.3 |
| Example 4 | ethoxyethyl cyanoacrylate | dimethyl sulfone | 5 | 52.0 | 94.2 | 89.7 | 75.3 | 52.0 | 99.5 | 89.7 | 37.9 |
| Example 6 | ethoxyethyl cyanoacrylate | ethylene carbonate | 8 | 34.9 | 87.8 | 97.7 | 66.7 | 34.9 | 87.8 | 99.6 | 47.9 |
| | | dimethyl sulfone | 2 | | | | | | | | |
| Example 7 | ethoxyethyl cyanoacrylate | ethylene carbonate | 16 | 64.8 | 85.9 | 99.5 | 26.0 | 64.8 | 85.9 | 99.6 | 32.6 |
| | | dimethyl sulfone | 4 | | | | | | | | |
| Example 9 | methoxyethyl cyanoacrylate | sulfolane | 20 | 40.3 | 89.1 | 99.6 | 38.1 | 40.3 | 89.1 | 99.4 | 34.4 |
| Example 10 | methoxyethyl cyanoacrylate | dimethyl sulfone | 5 | 62.2 | 88.8 | 67.3 | 84.9 | 56.2 | 83.9 | 99.7 | 43.2 |
| Example 12 | tetrahydrofurfuryl cyanoacrylate | sulfolane | 10 | 46.1 | 89.5 | 37.5 | 89.8 | 46.1 | 89.5 | 99.5 | 36.4 |
| Example 13 | tetrahydrofurfuryl cyanoacrylate | sulfolane | 20 | 36.5 | 87.9 | 99.2 | 16.6 | 36.5 | 87.9 | 99.4 | 13.2 |
| Example 14 | ethyl cyanoacrylate | sulfolane | 40 | 18.0 | 89.2 | 99.6 | 41.0 | 39.7 | 88.0 | 99.4 | 28.8 |

(continued)

| | 2-cyanoacrylate compound | Water-soluble compound | | Water immersion at 23°C | | | | Water immersion at 40°C | | | |
|---|---|---|---|---|---|---|---|---|---|---|---|
| | | | | before water immersion | | after water immersion | | before water immersion | | after water immersion | |
| | | Type | Added amount (% by mass) | Haze (%) | Total light transmittance (%) | Haze (%) | Total light transmittance (%) | Haze (%) | Total light transmittance (%) | Haze (%) | Total light transmittance (%) |
| Example 15 | ethyl cyanoacrylate | ethylene carbonate | 40 | 43.6 | 88.4 | 99.6 | 41.0 | 10.6 | 90.2 | 99.6 | 39.1 |
| Comparative Example 1 | ethyl cyanoacrylate | - | - | 20.9 | 88.6 | 10.6 | 90.3 | 41.1 | 90.4 | 34.1 | 88.9 |
| Comparative Example 2 | ethoxyethyl cyanoacrylate | - | - | 32.1 | 88.9 | 43.8 | 88.6 | 32.1 | 88.9 | 73.7 | 88.1 |
| Comparative Example 3 | ethoxyethyl cyanoacrylate | biphenyl | 10 | 25.9 | 89.1 | 25.3 | 88.4 | 48.8 | 90.0 | 82.7 | 90.7 |
| Comparative Example 4 | tetrahydrofurfuryl cyanoacrylate | - | - | 24.7 | 89.1 | 20.1 | 88.3 | 24.7 | 89.1 | 21.3 | 88.7 |
| Comparative Example 5 | methoxyethyl cyanoacrylate | - | - | 51.4 | 88.6 | 66.3 | 79.8 | 51.4 | 88.6 | 72.5 | 78.3 |

<Bonding and Peeling Test with Water>

Using human fingers with each adhesive composition of Examples 3, 4, 9 to 11 and 13 to 15 and Comparative Examples 1, 2, 4 and 5, three evaluators performed a bonding and peeling test.

A single drop of each adhesive composition was placed on the index finger, and the thumb was gently pressed thereagainst to spread the adhesive composition thin and to bond the thumb with the index finger.

All of the adhesive compositions of Examples 3, 4, 9 to 11 and 13 to 15 and Comparative Examples 1, 2, 4 and 5 made the thumb and the index finger no longer separable within 30 seconds.

Next, the thus bonded fingers were dipped into 40°C warm water and gently rubbed, and the time required for separating the thumb from the index finger was measured. The results of calculating the average of the values measured by the three evaluators are shown in Table 3. It is noted here that the value of Example 15 was provided by only one evaluator.

(Table 3)

| | 2-cyanoacrylate compound | Water-soluble compound | | Finger bonding test (seconds) |
|---|---|---|---|---|
| | | Type | Added amount (% by mass) | |
| Comparative Example 2 | ethoxyethyl cyanoacrylate | - | - | 105 |
| Example 3 | ethoxyethyl cvanoacrvlate | sulfolane | 20 | 40 |
| Example 4 | ethoxyethyl cvanoacrvlate | dimethyl sulfone | 5 | 100 |
| Comparative Example 5 | methoxyethyl cyanoacrylate | - | - | >180 |
| Example 9 | methoxyethyl cvanoacrvlate | sulfolane | 20 | 25 |
| Example 10 | methoxyethyl cyanoacrylate | dimethyl sulfone | 5 | 120 |
| Example 11 | methoxyethyl cvanoacrvlate | ethylene carbonate | 20 | 120 |
| Comparative Example 4 | tetrahydrofurfuryl cyanoacrylate | - | - | 85 |
| Example 13 | tetrahydrofurfuryl cyanoacrylate | sulfolane | 20 | 20 |
| Comparative Example 1 | ethyl cyanoacrylate | - | - | >180 |
| Example 14 | ethyl cyanoacrylate | sulfolane | 40 | 45 |
| Example 15 | ethyl cyanoacrylate | ethylene carbonate | 40 | 60 |

The fingers were separated more quickly in those cases where the adhesive compositions of Example 3, 4, 9 to 11 and 13 to 15 were used than in those cases where the compositions of Comparative Examples 1, 2, 4 and 5 each containing only a corresponding 2-cyanoacrylate compound were used.

Therefore, it was found that the easily water-disintegrable adhesive composition of the invention can be easily peeled off or removed with water after being cured, as compared to an adhesive composition containing only a corresponding cyanoacrylate compound.

In addition, as shown in Tables 1 and 2, a larger value of at least either one of the water absorption rate and the elution rate resulted in superior peelability with water after the curing.

Moreover, as shown in Table 2, a higher haze after the immersion in water or a lower total light transmittance after the immersion in water resulted in superior peelability with water after the curing.

(Examples 16 to 44 and Comparative Example 6)

Adhesive compositions of Examples 16 to 44 and Comparative Example 6 were each prepared in the same

manner as in Example 1, except that the respective water-soluble compounds shown in Table 4 were added to the respective 2-cyanoacrylate compounds shown in Table 4 in the respective amounts shown in Table 4.

Using the thus obtained adhesive compositions, the water absorption rate and the elution rate were evaluated in the same manner as in Example 1. In addition, using each of the thus obtained adhesive compositions, a bonding and peeling test was performed in the same manner as in Example 3, except that the test was performed by one or two evaluators and the fingers were separated two minutes after being bonded.

The evaluation results are shown in Table 4.

(Table 4)

| | 2-cyanoacrylate compound | Water-soluble compound | | Water immersion at 23°C | | Water immersion at 40°C | | Finger bonding test (seconds) |
|---|---|---|---|---|---|---|---|---|
| | | Type | Added amount (% by mass) | Water absorption rate (%) | Elution rate (%) | Water absorption rate (%) | Elution rate (%) | |
| Example 16 | ethoxyethyl cyanoacrylate | triethylene glycol dimethyl ether | 10 | 18.3 | 0.91 | 22.7 | 2.29 | 65 |
| Example 17 | ethoxyethyl cyanoacrylate | triethylene glycol dimethyl ether | 20 | 33.7 | 1.73 | 41.3 | 2.30 | 45 |
| Example 18 | ethoxyethyl cyanoacrylate | tetraethylene glycol dimethyl ether | 20 | 78.0 | 8.31 | 127.6 | 11.1 | 30 |
| Example 19 | methoxyethyl cyanoacrylate | triethylene glycol dimethyl ether | 10 | 18.8 | 0.42 | 40.5 | 1.63 | 25 |
| Example 20 | methoxyethyl cyanoacrylate | triethylene glycol dimethyl ether | 20 | 62.4 | 0.00 | 167.3 | 4.40 | 20 |
| Example 21 | methoxyethyl cyanoacrylate | tetraethylene glycol dimethyl ether | 20 | 55.6 | 5.08 | 152.6 | 10.0 | 25 |
| Example 22 | tetrahydrofurfuryl cyanoacrylate | triethylene glycol dimethyl ether | 10 | 5.46 | 3.05 | 15.2 | 1.36 | 25 |
| Example 23 | tetrahydrofurfuryl cyanoacrylate | triethylene glycol dimethyl ether | 20 | 15.6 | 4.90 | 52.8 | 8.55 | 25 |
| Example 24 | tetrahydrofurfuryl cyanoacrylate | tetraethylene glycol dimethyl ether | 20 | 21.1 | 8.80 | 42.1 | 8.20 | 30 |
| Example 25 | methoxyethyl cyanoacrylate | triethylene glycol dimethyl ether | 40 | 330.0 | 14.6 | 546.3 | 18.8 | 10 |
| Example 26 | methoxyethoxyethyl cya noacrylate/ ethoxyethyl cyanoacrylate = 50/50 | sulfolane | 13 | 8.84 | 1.08 | 13.4 | 7.49 | 10 |
| Example 27 | methoxyethoxyethyl cyanoacrylate/ ethoxyethyl cyanoacrylate = 50/50 | triethylene glycol dimethyl ether | 13 | 91.2 | 4.91 | 63.3 | 8.61 | 10 |

(continued)

| | 2-cyanoacrylate compound | Water-soluble compound | | Water immersion at 23°C | | Water immersion at 40°C | | Finger bonding test (seconds) |
|---|---|---|---|---|---|---|---|---|
| | | Type | Added amount (% by mass) | Water absorption rate (%) | Elution rate (%) | Water absorption rate (%) | Elution rate (%) | |
| Example 28 | methoxyethoxyethyl cyanoacrylate/ ethoxyethyl cyanoacrylate = 50/50 | triethylene glycol dimethyl ether | 20 | 130.1 | 6.44 | 83.6 | 11.9 | 10 |
| Comparative Example 6 | methoxyethoxyethyl cya noacrylate/ ethoxyethyl cyanoacrylate = 25/75 | - | - | 4.84 | 0.56 | 4.69 | 0.30 | 110 |
| Example 29 | methoxyethoxyethyl cya noacrylate/ ethoxyethyl cyanoacrylate = 25/75 | sulfolane | 13 | 11.2 | 3.60 | 12.2 | 6.46 | 20 |
| Example 30 | methoxyethoxyethyl cyanoacrylate/ ethoxyethyl cyanoacrylate = 25/75 | sulfolane | 20 | 25.9 | 9.01 | 19.3 | 11.5 | 5 |
| Example 31 | methoxyethoxyethyl cya noacrylate/ ethoxyethyl cyanoacrylate = 25/75 | triethylene glycol dimethyl ether | 13 | 81.8 | 3.93 | 61.0 | 8.22 | 15 |
| Example 32 | methoxyethoxyethyl cyanoacrylate/ ethoxyethyl cyanoacrylate = 25/75 | triethylene glycol dimethyl ether | 20 | 171.9 | 7.91 | 103.7 | 11.6 | 10 |
| Example 33 | ethoxyethyl cyanoacrylate | NOIGEN XL-40 | 16.7 | 5.92 | 0.05 | 5.75 | 1.72 | 45 |
| Example 34 | ethoxyethyl cyanoacrylate | NOIGEN XL-40 | 23.1 | 8.60 | 0.72 | 7.71 | 1.16 | 10 |
| Example 35 | ethoxyethyl cyanoacrylate | NOIGEN XL-40 | 28.6 | 10.1 | 0.90 | 8.83 | 1.22 | 5 |
| Example 36 | tetrahydrofurfuryl cyanoacrylate | NOIGEN XL-40 | 16.7 | 4.09 | 0.48 | 6.82 | 1.06 | 25 |
| Example 37 | tetrahydrofurfuryl cyanoacrylate | NOIGEN XL-40 | 23.1 | 5.99 | 1.34 | 7.77 | 1.04 | 10 |
| Example 38 | methoxyethyl cyanoacrylate | NOIGEN XL-40 | 9.1 | 5.38 | 0.14 | 6.46 | 0.05 | 35 |
| Example 39 | methoxyethyl cyanoacrylate | NOIGEN XL-40 | 16.7 | 7.02 | 0.27 | 11.5 | 0.83 | 10 |
| Example 40 | methoxyethyl cyanoacrylate | NOIGEN XL-40 | 23.1 | 8.02 | 0.44 | 13.6 | 0.46 | 10 |
| Example 41 | ethoxyethyl cyanoacrylate | NOIGEN XL-40 | 15 | 6.85 | -0.20 | 12.90 | 9.90 | 10 |
| | | sulfolane | 7.7 | | | | | |
| Example 42 | ethoxyethyl cyanoacrylate | NOIGEN XL-40 | 7.7 | 13.20 | 3.31 | 10.3 | 8.49 | 15 |
| | | sulfolane | 15 | | | | | |

(continued)

| | 2-cyanoacrylate compound | Water-soluble compound | | Water immersion at 23°C | | Water immersion at 40°C | | Finger bonding test (seconds) |
|---|---|---|---|---|---|---|---|---|
| | | Type | Added amount (% by mass) | Water absorption rate (%) | Elution rate (%) | Water absorption rate (%) | Elution rate (%) | |
| Example 43 | ethoxyethyl cyanoacrylate | NOIGEN XL-40 | 14 | 11.40 | 2.77 | 5.08 | 4.74 | 15 |
| | | sulfolane | 14 | | | | | |
| Example 44 | ethoxyethyl cyanoacrylate | NOIGEN XL-40 | 7.1 | 16.30 | 4.88 | 8.8 | 9.88 | 10 |
| | | sulfolane | 21 | | | | | |

The SP values of the water-soluble compounds shown in Table 4 that are not described above are as follows:

triethylene glycol dimethyl ether: 8.37 $(cal/cm^3)^{0.5}$
tetraethylene glycol dimethyl ether: 8.55 $(cal/cm^3)^{0.5}$
NOIGEN XL-40 (polyoxyethylene decyl ether, manufactured by DKS Co., Ltd.): 8.96 $(cal/cm^3)^{0.5}$ (assuming that, in the above-described Formula (1), the number of branches of R = 1, X = $CH_3$, and n = 4)

As shown in Table 4, the easily water-disintegrable adhesive compositions of Examples 16 to 44 had excellent peelability with water after being cured.

(Examples 2-1 to 2-49 and Comparative Examples 2-1 to 2-8)

Adhesive compositions of Examples 2-1 to 2-49 and Comparative Examples 2-1 to 2-8 were each prepared in the same manner as in Example 1, except that the respective water-soluble compounds shown in Tables 5 to 7 were added to the respective 2-cyanoacrylate compounds shown in Tables 5 to 7 in the respective amounts shown in Tables 5 to 7.
Using each of the thus obtained adhesive compositions, a bonding and peeling test was performed in the same manner as in Example 3, except that the test was performed by one or two evaluators and the fingers were separated two minutes after being bonded.
The evaluation results are shown in Tables 5 to 7.

(Table 5)

| | 2-cyanoacrylate compound | Water-soluble compound | | Finger bonding test (seconds) |
|---|---|---|---|---|
| | | Type | Added amount (% by mass) | |
| Example 2-1 | ethoxyethyl cyanoacrylate | triethylene glycol dimethyl ether | 10 | 65 |
| Example 2-2 | ethoxyethyl cyanoacrylate | triethylene glycol dimethyl ether | 20 | 45 |
| Example 2-3 | methoxyethyl cyanoacrylate | triethylene glycol dimethyl ether | 10 | 25 |
| Example 2-4 | methoxyethyl cyanoacrylate | triethylene glycol dimethyl ether | 20 | 20 |
| Example 2-5 | methoxyethyl cyanoacrylate | triethylene glycol dimethyl ether | 40 | 10 |
| Example 2-6 | terahydrofurfuryl cyanoacrylate | triethylene glycol dimethyl ether | 10 | 25 |
| Example 2-7 | terahydrofurfuryl cyanoacrylate | triethylene glycol dimethyl ether | 20 | 25 |
| Example 2-8 | ethyl cyanoacrylate | triethylene glycol dimethyl ether | 40 | 10 |
| Example 2-9 | methoxyethoxyethyl cyanoacrylate/ ethoxyethyl cyanoacrylate = 50/50 | sulfolane | 13 | 10 |

(continued)

| | 2-cyanoacrylate compound | Water-soluble compound | | Finger bonding test (seconds) |
|---|---|---|---|---|
| | | Type | Added amount (% by mass) | |
| Example 2-10 | methoxyethoxyethyl cyanoacrylate/ ethoxyethyl cyanoacrylate = 50/50 | sulfolane | 20 | 5 |
| Example 2-11 | methoxyethoxyethyl cyanoacrylate/ ethoxyethyl cyanoacrylate = 50/50 | triethylene glycol dimethyl ether | 13 | 10 |
| Example 2-12 | methoxyethoxyethyl cyanoacrylate/ ethoxyethyl cyanoacrylate = 50/50 | triethylene glycol dimethyl ether | 20 | 10 |
| Example 2-13 | methoxyethoxyethyl cyanoacrylate/ ethoxyethyl cyanoacrylate = 25/75 | sulfolane | 13 | 20 |
| Example 2-14 | methoxyethoxyethyl cyanoacrylate/ ethoxyethyl cyanoacrylate = 25/75 | sulfolane | 20 | 5 |
| Example 2-15 | methoxyethoxyethyl cyanoacrylate/ ethoxyethyl cyanoacrylate = 25/75 | triethylene glycol dimethyl ether | 13 | 15 |
| Example 2-16 | methoxyethoxyethyl cyanoacrylate/ ethoxyethyl cyanoacrylate = 25/75 | triethylene glycol dimethyl ether | 20 | 10 |
| Example 2-17 | ethoxyethyl cyanoacrylate | NOIGEN XL-40 | 9.1 | 60 |
| Example 2-18 | ethoxyethyl cyanoacrylate | NOIGEN XL-40 | 16.7 | 45 |
| Example 2-19 | ethoxyethyl cyanoacrylate | NOIGEN XL-40 | 23.1 | 10 |
| Example 2-20 | ethoxyethyl cyanoacrylate | EMULBON T-80 | 9.1 | 60 |
| Example 2-21 | ethoxyethyl cyanoacrylate | EMULBON T-80 | 16.7 | 60 |
| Example 2-22 | ethoxyethyl cyanoacrylate | EMULBON T-80 | 23.1 | 30 |
| Example 2-23 | methoxyethyl cyanoacrylate | NOIGEN XL-40 | 9.1 | 35 |
| Example 2-24 | methoxyethyl cyanoacrylate | NOIGEN XL-40 | 16.7 | 10 |
| Example 2-25 | methoxyethyl cyanoacrylate | NOIGEN XL-40 | 23.1 | 10 |
| Example 2-26 | methoxyethyl cyanoacrylate | EMULBON T-80 | 9.1 | 60 |
| Example 2-27 | methoxyethyl cyanoacrylate | EMULBON T-80 | 16.7 | 60 |

(Table 6)

| | 2-cyanoacrylate compound | Water-soluble compound | | Finger bonding test (seconds) |
|---|---|---|---|---|
| | | Type | Added amount (% by mass) | |
| Example 2-28 | tetrahydrofurfuryl cyanoacrylate | NOIGEN XL-40 | 9.1 | 60 |
| Example 2-29 | tetrahydrofurfuryl cyanoacrylate | NOIGEN XL-40 | 16.7 | 25 |
| Example 2-30 | tetrahydrofurfuryl cyanoacrylate | NOIGEN XL-40 | 23.1 | 10 |
| Comparative Example 2-1 | ethyl cyanoacrylate | DINP | 10 | 100 |
| Comparative Example 2-2 | ethyl cyanoacrylate | DINP | 13.5 | >120 |
| Comparative Example 2-3 | ethyl cyanoacrylate | DINP | 20 | 95 |
| Comparative Example 2-4 | ethyl cyanoacrylate | ATBC | 10 | 100 |
| Comparative Example 2-5 | ethyl cyanoacrylate | ATBC | 13.7 | >120 |
| Comparative Example 2-6 | ethyl cyanoacrylate | ATBC | 20 | 95 |
| Example 2-31 | ethoxyethyl cyanoacrylate | sulfolane | 8.3 | 30 |
| | | NOIGEN XL-40 | 8.3 | |
| Example 2-32 | ethoxyethyl cyanoacrylate | sulfolane | 7.7 | 10 |
| | | NOIGEN XL-40 | 15.4 | |
| Example 2-33 | ethoxyethyl cyanoacrylate | sulfolane | 15 | 15 |
| | | NOIGEN XL-40 | 7.7 | |
| Example 2-34 | ethoxyethyl cyanoacrylate | sulfolane | 14 | 15 |
| | | NOIGEN XL-40 | 14 | |
| Example 2-35 | ethoxyethyl cyanoacrylate | sulfolane | 21 | 10 |
| | | NOIGEN XL-40 | 7.1 | |
| Example 2-36 | methoxyethyl cyanoacrylate | triethylene glycol dimethyl ether | 7.7 | 30 |
| | | NOIGEN XL-40 | 15.4 | |
| Example 2-37 | methoxyethyl cyanoacrylate | triethylene glycol dimethyl ether | 15.4 | 15 |
| | | NOIGEN XL-40 | 7.7 | |
| Example 2-38 | tetrahydrofurfuryl cyanoacrylate | triethylene glycol dimethyl ether | 40 | 5 |
| Comparative Example 2-7 | 2-octyl cyanoacrylate | - | - | 90 |
| Example 2-39 | 2-octyl cyanoacrylate | NOIGEN XL-40 | 9.1 | 30 |
| Example 2-40 | 2-octyl cyanoacrylate | NOIGEN XL-40 | 16.7 | 30 |

(continued)

| | 2-cyanoacrylate compound | Water-soluble compound | | Finger bonding test (seconds) |
|---|---|---|---|---|
| | | Type | Added amount (% by mass) | |
| Example 2-41 | 2-octyl cyanoacrylate | EMULBON T-80 | 9.1 | 60 |
| Example 2-42 | ethyl cyanoacrylate | NOIGEN XL-40 | 9.1 | 60 |
| Example 2-43 | ethyl cyanoacrylate | NOIGEN XL-40 | 16.7 | 10 |
| Example 2-44 | ethyl cyanoacrylate | NOIGEN XL-40 | 23.1 | 10 |
| Example 2-45 | ethyl cyanoacrylate | EMULBON T-80 | 9.1 | 60 |
| Example 2-46 | ethyl cyanoacrylate | EMULBON T-80 | 16.7 | 10 |

(Table 7)

| | 2-cyanoacrylate compound | Water-soluble compound | | Finger bonding test (seconds) |
|---|---|---|---|---|
| | | Type | Added amount (% by mass) | |
| Comparative Example 2-8 | methoxyethoxyethyl cyanoacrylate/ ethoxyethyl cyanoacrylate = 25/75 | - | - | 110 |
| Example 2-40 | ethoxyethyl cyanoacrylate | tetraethylene glycol dimethyl ether | 20 | 30 |
| Example 2-41 | methoxyethyl cyanoacrylate | tetraethylene glycol dimethyl ether | 20 | 25 |
| Example 2-42 | terahydrofurfuryl cyanoacrylate | tetraethylene glycol dimethyl ether | 20 | 30 |
| Example 2-43 | ethyl cyanoacrylate | NOIGEN XL-40 | 28.6 | 5 |
| Example 2-44 | ethyl cyanoacrylate | NOIGEN XL-40 | 9.1 | 60 |
| Example 2-45 | ethyl cyanoacrylate | NOIGEN XL-40 | 16.7 | 10 |
| Example 2-46 | ethyl cyanoacrylate | NOIGEN XL-40 | 23.1 | 10 |
| Example 2-47 | ethyl cyanoacrylate | EMULBON T-80 | 9.1 | 60 |
| Example 2-48 | ethyl cyanoacrylate | EMULBON T-80 | 16.7 | 10 |
| Example 2-49 | ethoxyethyl cyanoacrylate | diethylene glycol diethyl ether | 20 | 35 |

The SP values of the water-soluble compounds shown in Tables 5 to 7 that are not described above are as follows:
EMULBON T-80 (fatty acid polyoxyethylene glycerol borate, manufactured by TOHO Chemical Industry Co., Ltd.): 9.34 $(cal/cm^3)^{0.5}$ (fatty acid: lauric acid (C12 linear saturated fatty acid), assuming that the number of repeated ethylene oxide units = 8)

The following compounds shown in Table 6 are hydrophobic compounds that do not exhibit a solubility in water.

DINP (diisononyl phthalate)

ATBC (o-acetyl tributyl citrate)

In all of the cases where an adhesive composition other than those of Comparative Examples 1, 2, 4, 5, 2-7 and 2-8, which contained only a corresponding cyanoacrylate compound with no water-soluble compound, was used, the fingers could not be separated in the above-described peeling test with water.

As shown in Tables 5 to 7, the easily water-disintegrable adhesive compositions of Examples 2-1 to 2-49 were easily peeled off or removed with water after being cured, as compared to the adhesive compositions containing only a corresponding cyanoacrylate compound.

Thereamong, the easily water-disintegrable adhesive compositions of Examples 2-23, 2-33 to 2-35, 2-45 and 2-46 had an excellent balance between the adhesion with the fingers and the peelability with water, and the easily water-disintegrable adhesive compositions of Examples 2-33 and 2-34 had a particularly excellent balance between the adhesion with the fingers and the peelability with water.

(Examples 3-1 to 3-22 and Comparative Example 3-1)

Adhesive compositions of 3-1 to 3-22 and Comparative Example 3-1 were each prepared in the same manner as in Example 1, except that the respective water-soluble compounds shown in Table 8 or 9 were added to the respective 2-cyanoacrylate compounds shown in Table 8 or 9 in the respective amounts shown in Table 8 or 9.

Using the thus obtained adhesive compositions, the total light transmittance and the haze were evaluated in the same manner as in Example 1. In addition, using each of the thus obtained adhesive compositions, a bonding and peeling test was performed in the same manner as in Example 3, except that the test was performed by one or two evaluators and the fingers were peeled off two minutes after being bonded.

The evaluation results are shown in Tables 8 and 9.

(Table 8)

| | 2-cyanoacr- ylate com- pound | Water-soluble compound | | Water immersion at 23°C | | | | Water immersion at 40°C | | | | Finger bondingtest (seconds) |
|---|---|---|---|---|---|---|---|---|---|---|---|---|
| | | Type | Added amount (% by mass) | before water immersion | | after water immersion | | before water immersion | | after water immersion | | |
| | | | | Haze (%) | Total light trans- mittance (%) | Haze (%) | Total light trans- mittance (%) | Haze (%) | Total light trans- mittance (%) | Haze (%) | Total light trans- mittance (%) | |
| Example 3-1 | ethoxyethyl cyanoacrylate | triethylene glycol dimethyl ether | 10 | 13.1 | 90.3 | 99.6 | 40.4 | 12.2 | 88.0 | 99.6 | 47.8 | 65 |
| Example 3-2 | ethoxyethyl cyanoacrylate | triethylene glycol dimethyl ether | 20 | 14.9 | 89.4 | 99.5 | 42.9 | 14.1 | 88.8 | 99.4 | 39.1 | 45 |
| Example 3-3 | ethoxyethyl cyanoacrylate | tetraethylene glycol dimethyl ether | 20 | 27.6 | 89.7 | 99.3 | 30.0 | 15.1 | 88.7 | 99.0 | 17.8 | 30 |
| Example 3-4 | methoxyethyl cyanoacrylate | triethylene glycol dimethyl ether | 10 | 38.9 | 88.5 | 99.5 | 27.9 | 23.3 | 90.2 | 99.7 | 34.7 | 25 |
| Example 3-5 | methoxyethyl cyanoacrylate | triethylene glycol dimethyl ether | 20 | 15.8 | 89.2 | 99.6 | 34.5 | 26.7 | 89.1 | 99.6 | 27.4 | 20 |
| Example 3-6 | methoxyethyl cyanoacrylate | tetraethylene glycol dimethyl ether | 20 | 94.4 | 92.1 | 99.5 | 19.1 | 89.0 | 92.9 | 99.7 | 29.4 | 25 |
| Example 3-7 | tetrahydrofurfuryl cyanoacrylate | triethylene glycol dimethyl ether | 10 | 7.54 | 88.1 | 69.5 | 57.8 | 31.4 | 86.8 | 99.6 | 36.3 | 25 |

(continued)

| | 2-cyanoacrylate compound | Water-soluble compound | | Water immersion at 23°C | | | | Water immersion at 40°C | | | | Finger bonding test (seconds) |
|---|---|---|---|---|---|---|---|---|---|---|---|---|
| | | | | before water immersion | | after water immersion | | before water immersion | | after water immersion | | |
| | | Type | Added amount (% by mass) | Haze (%) | Total light transmittance (%) | Haze (%) | Total light transmittance (%) | Haze (%) | Total light transmittance (%) | Haze (%) | Total light transmittance (%) | |
| Example 3-8 | tetrahydrofurfuryl cyanoacrylate | triethylene glycol dimethyl ether | 20 | 10.7 | 88.4 | 99.6 | 36.2 | 28.2 | 88.2 | 99.6 | 28.1 | 25 |
| Example 3-9 | tetrahydrofurfuryl cyanoacrylate | tetraethylene glycol dimethyl ether | 20 | 24.8 | 86.7 | 99.7 | 30.0 | 17.2 | 89.2 | 99.6 | 18.1 | 30 |
| Example 3-10 | methoxyethyl cyanoacrylate | triethylene glycol dimethyl ether | 40 | 37.7 | 88.9 | 98.6 | 65.2 | 22.3 | 88.8 | 99.6 | 19.0 | 10 |
| Example 3-11 | methoxyethoxyethyl cyanoacrylate/ ethoxyethyl cyanoacrylate = 50/50 | sulfolane | 13 | 9.28 | 88.9 | 96.1 | 69.5 | 16.9 | 88.0 | 99.1 | 45.7 | 10 |
| Example 3-12 | methoxyethoxyethyl cyanoacrylate/ ethoxyethyl cyanoacrylate = 50/50 | triethylene glycol dimethyl ether | 13 | 19.4 | 87.0 | 98.8 | 38.0 | 8.62 | 89.8 | 99.6 | 38.6 | 10 |

(continued)

| | 2-cyanoacrylate compound | Water-soluble compound | | Water immersion at 23°C | | | | Water immersion at 40°C | | | | Finger bonding test (seconds) |
|---|---|---|---|---|---|---|---|---|---|---|---|---|
| | | | | before water immersion | | after water immersion | | before water immersion | | after water immersion | | |
| | | Type | Added amount (% by mass) | Haze (%) | Total light transmittance (%) | Haze (%) | Total light transmittance (%) | Haze (%) | Total light transmittance (%) | Haze (%) | Total light transmittance (%) | |
| Example 3-13 | methoxyethoxyethyl cyanoacrylate/ ethoxyethyl cyanoacrylate = 50/50 | triethylene glycol dimethyl ether | 20 | 36.9 | 89.6 | 99.5 | 43.3 | 28.5 | 90.2 | 99.6 | 46.8 | 10 |
| Example 3-14 | methoxyethoxyethyl cyanoacrylate/ ethoxyethyl cyanoacrylate = 25/75 | sulfolane | 13 | 28.4 | 89.8 | 99.5 | 46.8 | 14.8 | 89.6 | 99.3 | 37.6 | 20 |
| Example 3-15 | methoxyethoxyethyl cyanoacrylate/ ethoxyethyl cyanoacrylate = 25/75 | sulfolane | 20 | 37.5 | 88.8 | 99.4 | 39.0 | 28.4 | 84.7 | 99.6 | 46.3 | 5 |
| Example 3-16 | methoxyethoxyethyl cyanoacrylatelethoxyethyl cyanoacrylate = 25/75 | triethylene glycol dimethyl ether | 13 | 26.2 | 87.5 | 99.6 | 31.6 | 39.3 | 89.4 | 99.1 | 35.8 | 15 |

(continued)

| | 2-cyanoacrylate compound | Water-soluble compound | | Water immersion at 23°C | | | | Water immersion at 40°C | | | | Finger bonding test (seconds) |
|---|---|---|---|---|---|---|---|---|---|---|---|---|
| | | | | before water immersion | | after water immersion | | before water immersion | | after water immersion | | |
| | | Type | Added amount (% by mass) | Haze (%) | Total light transmittance (%) | Haze (%) | Total light transmittance (%) | Haze (%) | Total light transmittance (%) | Haze (%) | Total light transmittance (%) | |
| Example 3-17 | methoxyethoxyethyl cyanoacrylate/ ethoxyethyl cyanoacrylate = 25/75 | triethylene glycol dimethyl ether | 20 | 6.25 | 89.6 | 99.1 | 40.6 | 14.2 | 88.1 | 99.3 | 37.9 | 10 |
| Example 3-18 | ethoxyethyl cyanoacrylate | NOIGEN XL-40 | 16.7 | 19.2 | 90.2 | 99.3 | 30.6 | 15.0 | 89.5 | 99.3 | 37.4 | 45 |

**(Table** 9)

| | 2-cyanoacrylate compound | Water-soluble compound | | Water immersion at 23°C | | | | Water immersion at 40°C | | | | Finger bonding test (seconds) |
|---|---|---|---|---|---|---|---|---|---|---|---|---|
| | | | | before water immersion | | after water immersion | | before water immersion | | after water immersion | | |
| | | Type | Added amount (% by mass) | Haze (%) | Total light transmittance (%) | Haze (%) | Total light transmittance (%) | Haze (%) | Total light transmittance (%) | Haze (%) | Total light transmittance (%) | |
| Comparative Example 3-1 | methoxyethoxyethyl cyanoacrylate/ ethoxyethyl cyanoacrylate = 25/75 | - | - | 26.4 | 88.7 | 26.5 | 86.3 | 27.7 | 89.9 | 96.2 | 70.3 | 110 |
| Example 3-19 | ethoxyethyl cyanoacrylate | NOIGEN XL-40 | 15 | 16.4 | 85.3 | 99.5 | 27.8 | 20.9 | 89.4 | 99.8 | 33.2 | 10 |
| | | sulfolane | 7.7 | | | | | | | | | |
| Example 3-20 | ethoxyethyl cyanoacrylate | NOIGEN XL-40 | 7.7 | 7.6 | 90.6 | 100.0 | 28.9 | 6.0 | 89.8 | 98.8 | 22.9 | 15 |
| | | sulfolane | 15 | | | | | | | | | |
| Example 3-21 | ethoxyethyl cyanoacrylate | NOIGEN XL-40 | 14 | 14.2 | 87.5 | 99.6 | 25.7 | 25.1 | 87.1 | 99.6 | 32.4 | 15 |
| | | sulfolane | 14 | | | | | | | | | |
| Example 3-22 | ethoxyethyl cyanoacrylate | NOIGEN XL-40 | 21 | 16.8 | 89.1 | 99.6 | 23.9 | 23.5 | 88.9 | 99.6 | 31.7 | 10 |
| | | sulfolane | 7.1 | | | | | | | | | |

As shown in Tables 8 and 9, the easily water-disintegrable adhesive compositions of Examples 3-1 to 3-22 had excellent peelability with water after being cured.

Industrial Applicability

The easily water-disintegrable adhesive composition of the invention contains a 2-cyanoacrylate compound and can be utilized as a so-called instant adhesive in a wide range of products and technical fields of various industries, including general household, teaching material, building material, and medical applications. The easily water-disintegrable adhesive composition of the invention is particularly useful for temporary bonding and teaching materials.

In addition, the easily water-disintegrable adhesive composition of the invention can be suitably used for bonding not only adherends of the same kind, but also adherends of different kinds (e.g., a metal and a resin) in particular.

## Claims

**1.** An easily water-disintegrable adhesive composition, comprising:

a 2-cyanoacrylate compound; and
a water-soluble compound,
wherein a cured product of the adhesive composition has a water absorption rate of 5% or higher when immersed in 40°C water for 24 hours.

**2.** The easily water-disintegrable adhesive composition according to claim 1, wherein the cured product of the adhesive composition has a water absorption rate of 5% or higher when immersed in 23°C water for 24 hours.

**3.** The easily water-disintegrable adhesive composition according to claim 1 or 2, wherein the cured product of the adhesive composition has an elution rate of 5% or higher when immersed in 40°C water for 24 hours.

**4.** The easily water-disintegrable adhesive composition according to any one of claims 1 to 3, wherein the cured product of the adhesive composition has an elution rate of 2% or higher when immersed in 23°C water for 24 hours.

**5.** The easily water-disintegrable adhesive composition according to any one of claims 1 to 4, wherein the water-soluble compound has a solubility parameter of from 8.0 $(cal/cm^3)^{0.5}$ to 23.4 $(cal/cm^3)^{0.5}$.

**6.** The easily water-disintegrable adhesive composition according to any one of claims 1 to 5, wherein the 2-cyanoacrylate compound has a solubility parameter of from 10.0 $(cal/cm^3)^{0.5}$ to 23.4 $(cal/cm^3)^{0.5}$.

**7.** The easily water-disintegrable adhesive composition according to any one of claims 1 to 6, wherein the cured product of the adhesive composition has a total light transmittance of 80% or higher as measured in accordance with JIS K7361-1, and
the cured product has a total light transmittance of 50% or lower as measured in accordance with JIS K7361-1 after being immersed in 40°C water for 24 hours.

**8.** The easily water-disintegrable adhesive composition according to any one of claims 1 to 7, wherein the cured product has a total light transmittance of 70% or lower as measured in accordance with JIS K7361-1 after being immersed in 23°C water for 24 hours.

**9.** The easily water-disintegrable adhesive composition according to any one of claims 1 to 8, wherein the cured product of the adhesive composition has a haze value of from 1% to 70% as measured in accordance with JIS K7136, and the cured product has a haze value of 95% or higher as measured in accordance with JIS K7136 after being immersed in 40°C water for 24 hours.

**10.** The easily water-disintegrable adhesive composition according to any one of claims 1 to 9, wherein the cured product has a haze value of 95% or higher as measured in accordance with JIS K7136 after being immersed in 23°C water for 24 hours.

**11.** The easily water-disintegrable adhesive composition according to any one of claims 1 to 10, wherein the content of the water-soluble compound is from 0.5 parts by mass to 50 parts by mass with respect to a total content of 100

parts by mass of the 2-cyanoacrylate compound and the water-soluble compound.

**12.** The easily water-disintegrable adhesive composition according to any one of claims 1 to 11, wherein the 2-cyanoacrylate compound is an alkyl-2-cyanoacrylate compound, or a 2-cyanoacrylate compound having an ether bond, a carbonate bond, or a sulfonyl bond.

**13.** The easily water-disintegrable adhesive composition according to any one of claims 1 to 12, wherein the 2-cyanoacrylate compound is at least one compound selected from the group consisting of ethyl-2-cyanoacrylate, ethoxyethyl-2-cyanoacrylate, methoxyethyl-2-cyanoacrylate, methoxypropoxypropyl-2-cyanoacrylate, tetrahydrofurfuryl-2-cyanoacrylate, glycerol carbonate-2-cyanoacrylate, sulforanylmethyl-2-cyanoacrylate, and methoxyethoxyethyl-2-cyanoacrylate.

**14.** The easily water-disintegrable adhesive composition according to any one of claims 1 to 13, wherein the water-soluble compound is at least one compound selected from the group consisting of ethylene carbonate, dimethyl sulfone, sulfolane, $\gamma$-butyrolactone, propylene carbonate, triethylene glycol dimethyl ether, tetraethylene glycol dimethyl ether, polyoxyalkylene alkyl ether, polyoxyalkylene dialkyl ether, polyoxyalkylene acetate, polyoxyalkylene diacetate, and fatty acid polyoxyethylene glycerol borate.

**15.** The easily water-disintegrable adhesive composition according to any one of claims 1 to 14, which is for temporary fixation.

**16.** The easily water-disintegrable adhesive composition according to any one of claims 1 to 15, which is for a teaching material.

## INTERNATIONAL SEARCH REPORT

International application No.
PCT/JP2019/004678

A. CLASSIFICATION OF SUBJECT MATTER
Int.Cl. C09J4/04(2006.01)i, C09J11/06(2006.01)i

According to International Patent Classification (IPC) or to both national classification and IPC

B. FIELDS SEARCHED

Minimum documentation searched (classification system followed by classification symbols)
Int.Cl. C09J4/04, C09J11/06

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
JSTPlus/JMEDPlus/JST7580 (JDreamIII)

C. DOCUMENTS CONSIDERED TO BE RELEVANT

| Category* | Citation of document, with indication, where appropriate, of the relevant passages | Relevant to claim No. |
|---|---|---|
| X | JP 62-153370 A (ALPHA TECHNICAL RESERCH CO.) 08 July 1987, claims 1-6, example 8, table 1, page 5, upper right column, lines 1-5 & US 4749778 A, claims 1-2, 4-5, 7, example 8, table 1, column 5, lines 25-31 & EP 229367 A1 & AU 6696686 A & KR 10-1990-0002833 B1 & AU 591745 B2 | 1-16 |
| X | JP 2000-73015 A (MATSUMOTO PHARMACEUTICAL MANUFACTURE CO., LTD.) 07 March 2000, claims 1-3, 5, examples 1-9, table 1, paragraphs [0002]-[0009], [0023]-[0024] (Family: none) | 1-16 |
| A | JP 2008-229213 A (TERUMO CORP.) 02 October 2008 (Family: none) | 1-16 |
| A | JP 2000-53924 A (TOAGOSEI CO., LTD.) 22 February 2000 (Family: none) | 1-16 |
| A | JP 4-70323 A (ALPHA TECHNICAL RESERCH CO.) 05 March 1992 (Family: none) | 1-16 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
11 April 2019 (11.04.2019)

Date of mailing of the international search report
23 April 2019 (23.04.2019)

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000073015 A
- JP 2011104747 A